# EUROPEAN PATENT APPLICATION

(11) **EP 4 656 501 A1**
(43) Date of publication of application: **03.12.2025**
(21) Application number: 24806341.4
(22) Date of filing: 28.04.2024
(51) Int. Cl.: B62D 25/20, B62D 25/00, B62D 23/00, B60K 1/04, B22D 17/00

(54) **AUTOMOBILE UNDERBODY DIE-CAST STRUCTURE**

(30) Priority: 12.05.2023 CN 202310548617
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: XU, Chao, Ningbo, Zhejiang 315899 (CN); LI, Tianqi, Ningbo, Zhejiang 315899 (CN); SONG, Yadong, Ningbo, Zhejiang 315899 (CN); ZHANG, Chaohui, Ningbo, Zhejiang 315899 (CN); TANG, Huaping, Ningbo, Zhejiang 315899 (CN); WANG, Jie, Ningbo, Zhejiang 315899 (CN); YU, Bing, Ningbo, Zhejiang 315899 (CN)
(74) Representative: Michalski Hüttermann & Partner Patentanwälte mbB
(86) International application number: PCT/CN2024/090356
(87) International publication number: WO 2024/234985

(57) **Abstract**

An automobile underbody die-cast structure (1), which is formed by integrated die casting, and comprises a front floor (2) and a nested member (5). The front floor (2) comprises a hollow area (6); the nested member (5) is arranged in the hollow area (6) of the front floor (2) and is connected to the front floor (2); and the nested member (5) can be separated from the front floor (2) by cutting. The material utilization rate of the automobile underbody die-cast structure (1) is increased, and molds of the nested member (5) are saved, thereby saving the costs and improving the efficiency.

## Description

### CROSS-REFERENCE TO RELATED APPLICATIONS

The present application claims the priority of the Chinese patent application filed on May 12, 2023, with the application number 2023105486176, the entire content of which is incorporated herein by reference.

### TECHNICAL FIELD

The present application relates to, but is not limited to, the technical field of automobiles, and in particular, to an automobile underbody die-cast structure.

### BACKGROUND

An underbody is a load-bearing part of an entire vehicle body, and its structural design has an important impact on convenience and cost of manufacturing of vehicle, etc.

### SUMMARY

The following is a summary of the subject described in detail herein. This summary is not intended to limit the protection scope of the claims.

In a first aspect, the present application provides an automobile underbody die-cast structure, wherein the automobile underbody die-cast structure is megacast and includes a front floor and an insert. The front floor includes a hollow area, the insert is arranged in the hollow area of the front floor and connected with the front floor, and the insert and the front floor can be separated by cutting.

Optionally, the front floor includes a first sill beam and a second sill beam arranged oppositely, and a first cross beam and a second cross beam connecting the first sill beam and the second sill beam. The first sill beam, the second sill beam, the first cross beam and the second cross beam enclose to form the hollow area. The insert extends between the first sill beam and the second sill beam, or extends between the first cross beam and the second cross beam.

Optionally, the insert is staggered from a gating system for die-casting.

Optionally, the insert extends between the first sill beam and the second sill beam, and the insert is located on a side of the gating system close to the first cross beam; or the insert extends between the first cross beam and the second cross beam, and the insert is located on a side of the gating system close to the first sill beam or the second sill beam.

Optionally, the insert extends between the first sill beam and the second sill beam, the automobile underbody die-cast structure includes a first connecting part, a second connecting part and a third connecting part. The first connecting part connects one end of the insert and the first sill beam, the second connecting part connects other end of the insert and the second sill beam, and the third connecting part connects a middle part of the insert and the first cross beam.

Optionally, a width of the first cross beam is greater than a width of each of the first sill beam and the second sill beam; and/or a length of the first cross beam is less than a length of each of the first sill beam and the second sill beam; and/or a distance between the first cross beam and the second cross beam is greater than a distance between the first sill beam and the second sill beam.

Optionally, the automobile underbody die-cast structure further includes a front engine compartment and a rear floor. The front engine compartment includes front longitudinal beams, and the rear floor includes rear longitudinal beams and a rear cross beam. The front longitudinal beams are located at both ends of the first cross beam and connected with the first cross beam, and the front longitudinal beams are connected with the first sill beam and the second sill beam respectively. The rear longitudinal beams are located at both ends of the second cross beam, the rear longitudinal beams are connected with the first sill beam and the second sill beam respectively, and there is a distance between the rear cross beam and the second cross beam.

Optionally, the insert includes a shock tower brace, the shock tower brace includes a first sub-beam and a second sub-beam. The first sub-beam is of a straight structure or a curved structure, the second sub-beam is of a curved structure. A curvature of the second sub-beam is greater than that of the first sub-beam. Both ends of the first sub-beam and the second sub-beam are connected to each other, one end where the first sub-beam and the second sub-beam are connected is connected with the first connecting part, other end where the first sub-beam and the second sub-beam are connected is connected with the second connecting part, and the third connecting part connects the middle part of the first sub-beam and the first cross beam.

Optionally, the automobile underbody die-cast structure further includes an additional insert, the additional insert is arranged in the hollow area of the front floor and connected with the front floor, and the additional insert and the front floor can be separated by cutting.

Optionally, the additional insert is connected with the first sill beam.

Optionally, the automobile underbody die-cast structure further includes one or more fourth connecting parts, and the fourth connecting parts connect the first sill beam and the additional insert.

Optionally, the first connecting part connects the insert, the additional insert and the first sill beam.

The automobile underbody die-cast structure provided by the present application is megacast and includes a front floor and an insert; the front floor includes a hollow area, the insert is arranged in the hollow area of the front floor and connected with the front floor, and the insert and the front floor can be separated by cutting. By arranging the insert in the hollow area and megacasting it with the automobile underbody, after die-casting, the insert is separated by cutting and applied to the automobile, which can improve the material utilization rate of the automobile underbody die-cast structure, eliminate the mold for the insert, thereby saving costs and improving efficiency. In addition, the generalization rate of the insert can be improved, and the development cost can be reduced.

It should be understood that the above general description and the following detailed description are only exemplary and explanatory, and should not limit the present application.

### BRIEF DESCRIPTION OF THE DRAWINGS

The drawings here are incorporated into the specification and constitute a part of this specification, showing embodiments consistent with the present application, and are used together with the specification to explain the principles of the present application.
Fig. 1 is a structural schematic diagram of an embodiment of the automobile underbody die-cast structure according to the present application;
Fig. 2 is a structural schematic diagram of another embodiment of the automobile underbody die-cast structure according to the present application;
Fig. 3 is a structural schematic diagram of a shock tower brace installed on an engine compartment shock tower of an automobile underbody according to the present application;
Fig. 4 is a structural schematic diagram of yet another embodiment of the automobile underbody die-cast structure according to the present application.

### Reference numerals:

1. Automobile underbody die-cast structure; 2. Front floor; 3. Front engine compartment; 4. Rear floor; 5. Insert; 6. Hollow area; 7. Gating system; 8. Additional insert; 10. First connecting part; 11. Second connecting part; 12. Third connecting part; 13. Fourth connecting part; 20. First sill beam; 21. Second sill beam; 22. First cross beam; 23. Second cross beam; 30. Front longitudinal beam; 31. Front cross beam; 32. Shock tower; 40. Rear longitudinal beam; 41. Rear cross beam; 50. Shock tower brace; 80. B-pillar inner lower joint; 500. First sub-beam; 501. Second sub-beam.

### DETAILED DESCRIPTION OF THE EMBODIMENTS

Here will be a detailed description of exemplary embodiments, and examples thereof are shown in the drawings. When the following description refers to the drawings, unless otherwise indicated, the same numbers in different drawings represent the same or similar elements. The embodiments described in the following exemplary embodiments do not represent all embodiments consistent with the present application. On the contrary, they are only examples of devices and methods consistent with some aspects of the present application as detailed in the appended claims.

The terms used in the present application are only for the purpose of describing specific embodiments and are not intended to limit the present application. Unless otherwise defined, the technical terms or scientific terms used in the present application shall have the ordinary meanings understood by those with ordinary skills in the technical field to which the present application belongs. The words "first", "second" and similar terms used in the description and claims of the present application do not indicate any order, quantity or importance, but are only used to distinguish different components. Similarly, words such as "a", "an" or similar terms do not indicate a limitation of quantity, but mean that there is at least one. "Multiple" or "several" mean two or more. Unless otherwise specified, similar terms such as "front", "rear", "lower" and/or "upper" are only for ease of description and are not limited to one position or spatial orientation. Words such as "include" or "comprise" mean that the elements or objects appearing before "include" or "comprise" cover the elements or objects listed after "include" or "comprise" and their equivalents, and do not exclude other elements or objects. Words such as "connect" or "be connected" are not limited to physical or mechanical connections, but may include electrical connections, whether direct or indirect.

The terms used in the present application are only for the purpose of describing specific embodiments and are not intended to limit the present application. The singular forms "a", "the" and "said" used in the present application and the appended claims are also intended to include plural forms unless the context clearly indicates otherwise. It should also be understood that the term "and/or" as used herein refers to and includes any or all possible combinations of one or more of the associated listed items.

To achieve light weight, new energy vehicles mostly adopt megacasting technology. Each component is die-cast with a separate mold, resulting in high cost and low manufacturing efficiency.

The present application provides an automobile underbody die-cast structure. The automobile underbody die-cast structure according to the present application will be described in detail below with reference to the drawings. In the case of no conflict, the features of the following embodiments and implementations can be combined with each other.

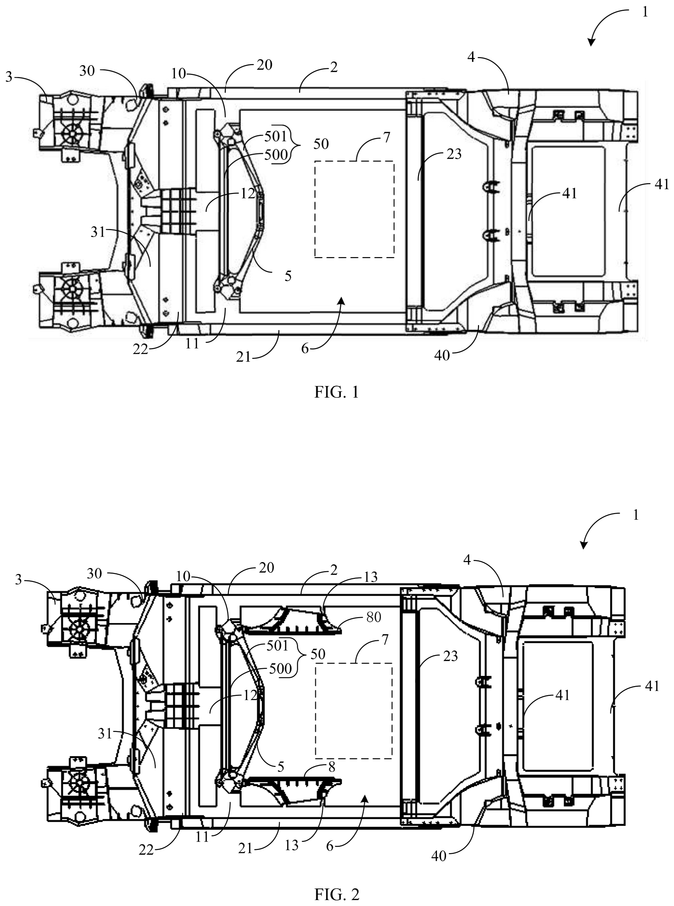

Referring to the embodiment shown in Fig. 1, Fig. 1 is a structural schematic diagram of an embodiment of the automobile underbody die-cast structure according to the present application. The present application provides an automobile underbody die-cast structure 1, where the automobile underbody die-cast structure 1 is megacast and includes a front floor 2 and an insert 5. The front floor 2 includes a hollow area 6. The insert 5 is arranged in the hollow area 6 of the front floor 2 and connected with the front floor 2, and the insert 5 and the front floor 2 can be separated by cutting. The automobile underbody can be a CTB (Cell to Body) structure in which an upper shell of a battery pack integrates components such as a seat cross beam and the front floor, so the area of the front floor 2 is a hollow structure. The insert 5 includes die-cast part(s) used in this vehicle model or die-cast part(s) used in another vehicle model, and refers to component(s) that can be inserted/nested with other components for joint die-casting. The insert 5 is designed in the hollow area 6, and the automobile underbody die-cast structure 1 is formed by megacasting. After die-casting, the insert 5 is separated by cutting and applied to this vehicle model or another vehicle model. With this arrangement, a material utilization rate of the automobile underbody die-cast structure 1 can be improved, needs for dedicated mold for the insert 5 can be eliminated, thereby saving costs and improving efficiency. In addition, the megacasting of the insert 5 and the automobile underbody can improve generalization rate of the insert 5 and reduce development cost.

In some embodiments, the front floor 2 includes a first sill beam 20 and a second sill beam 21 arranged oppositely, and a first cross beam 22 and a second cross beam 23 connecting the first sill beam 20 and the second sill beam 21. The first sill beam 20, the second sill beam 21, the first cross beam 22 and the second cross beam 23 enclose/define the hollow area 6. The insert 5 extends between the first sill beam 20 and the second sill beam 21, or extends between the first cross beam 22 and the second cross beam 23. The first sill beam 20 and the second sill beam 21 are sill beams arranged in parallel along a length direction of the automobile underbody, and the first cross beam 22 and the second cross beam 23 are cross beams arranged in parallel along a width direction of the automobile underbody. The first sill beam 20, the second sill beam 21, the first cross beam 22 and the second cross beam 23 enclose the hollow area 6. Arranging the insert 5 between the first sill beam 20 and the second sill beam 21 or between the first cross beam 22 and the second cross beam 23 can meet design requirements of the die-casting structure. In addition, with this arrangement, overall stability of the automobile underbody die-cast structure 1 can be improved. In some embodiments, the insert 5 extending between the first sill beam 20 and the second sill beam 21 means that the extending direction of the relatively long part of the insert 5 is from the first sill beam 20 to the second sill beam 21, and the insert 5 extending between the first cross beam 22 and the second cross beam 23 means that the extending direction of the relatively long part of the insert 5 is from the first cross beam 22 to the second cross beam 23.

In some embodiments, the insert 5 is staggered from a gating system 7 for die-casting. The gating system 7 is arranged on a side close to the second cross beam 23. Based on the space for arranging the gating system 7 in the process, the insert 5 is arranged in the hollow area 6 of the front floor 2 to ensure that the insert 5 meets the requirements of dimensional space and die-casting structure design, and there is no overlap between an orthographic projection of the insert 5 on the hollow area 6 and an orthographic projection of the gating system 7 on the hollow area 6.

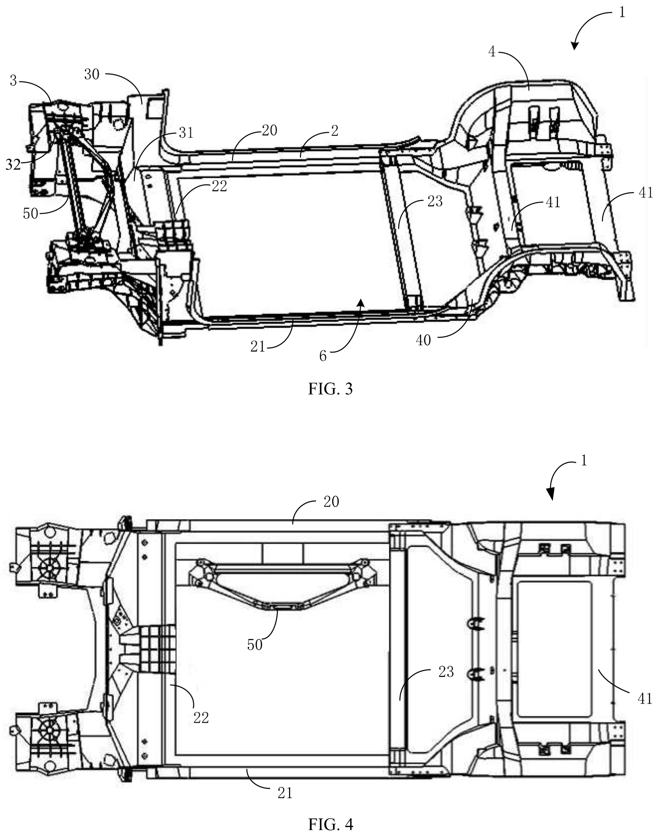

In some embodiments, as shown in Fig. 4, the insert 5 extends between the first cross beam 22 and the second cross beam 23, and the insert 5 is located to a side of the gating system 7 close to the first sill beam 20 or the side close to the second sill beam 21. Both ends of the insert 5 are respectively connected with the first cross beam 22 and the second cross beam 23. The insert 5 is arranged between the first sill beam 20 and the gating system 7 or between the second sill beam 21 and the gating system 7, avoiding the gating system 7. With this arrangement, the requirements of dimensional space and die-casting structure design can be met, and the overall stability of the automobile underbody die-cast structure 1 can be improved. In some embodiments, the insert 5 extends between the first sill beam 20 and the second sill beam 21, and the insert 5 is located to a side of the gating system 7 close to the first cross beam 22. Both ends of the insert 5 are respectively connected with the first sill beam 20 and the second sill beam 21, and the insert 5 is arranged between the gating system 7 and the first cross beam 22, avoiding the gating system 7. With this arrangement, the space layout is reasonable and the overall stability of the automobile underbody die-cast structure 1 is high.

In some embodiments, the insert 5 extends between the first sill beam 20 and the second sill beam 21, and the automobile underbody die-cast structure 1 includes a first connecting part 10, a second connecting part 11 and a third connecting part 12. The first connecting part 10 connects one end of the insert 5 and the first sill beam 20, the second connecting part 11 connects other end of the insert 5 and the second sill beam 21, and the third connecting part 12 connects a middle part of the insert 5 and the first cross beam 22. The first connecting part 10 and the second connecting part 11 respectively connect both ends of the insert 5 with the first sill beam 20 and the second sill beam 21 in the width direction of the automobile underbody, and the third connecting part 12 connects the middle part of the insert 5 with the first cross beam 22 in the length direction of the automobile underbody. After the die-casting of the automobile underbody die-cast structure 1 is completed, the first connecting part 10, the second connecting part 11 and the third connecting part 12 are cut (e.g., laser cutting), and the insert 5 is applied to an automobile. Adding the third connecting part 12 between the middle part of the insert 5 and the first cross beam 22 can improve the strength and stability of the automobile underbody die-cast structure 1.

In some embodiments, referring to the embodiment shown in Fig. 1, the insert 5 includes a shock tower brace 50. The shock tower brace 50 includes a first sub-beam 500 and a second sub-beam 501. The first sub-beam 500 is of a straight structure or a curved structure, and the second sub-beam 501 is of a curved structure. A curvature of the second sub-beam 501 is greater than that of the first sub-beam 500. Both ends of the first sub-beam 500 and the second sub-beam 501 are connected to each other. One end where the first sub-beam 500 and the second sub-beam 501 are connected is connected with the first connecting part 10, other end where the first sub-beam 500 and the second sub-beam 501 are connected is connected with the second connecting part 11, and the third connecting part 12 connects the middle part of the first sub-beam 500 and the first cross beam 22. The shock tower brace 50 is usually installed on an engine compartment shock tower, and its size and structure meet the requirements for the insert 5, so the shock tower brace 50 can be arranged in the blank area 6, and the shock tower brace extends between the first sill beam 20 and the second sill beam 21. The shock tower brace 50 is composed of the first sub-beam 500 and the second sub-beam 501. Both ends of the first sub-beam 500 and the second sub-beam 501 are connected, and the first connecting part 10 and the second connecting part 11 are arranged at the connection positions of both ends of the first sub-beam 500 and the second sub-beam 501 respectively. In some embodiments, the first sub-beam 500 is usually of a straight structure or a slightly curved structure, and the second sub-beam 501 is of a structure with a curvature greater than that of the first sub-beam 500, so the third connecting part 12 is arranged between the first sub-beam 500 and the first cross beam 22. The insert can also be other components that can be manufactured by die-casting, and its size fits the size of the front floor minus the gating system to meet the insert/nesting requirements.

In some embodiments, the automobile underbody die-cast structure 1 includes an additional insert 8. The additional insert 8 is arranged in the hollow area 6 of the front floor 2 and connected with the front floor 2, and the additional insert 8 and the front floor 2 can be separated by cutting. The additional insert 8 is arranged staggeredly/offset from the gating system 7 and connected with the first sill beam 20 and/or the second sill beam 21. With this arrangement, the space of the hollow area 6 can be fully utilized, the material utilization rate of the automobile underbody die-cast structure 1 can be improved, the mold for the insert 5 can be eliminated, thereby saving costs and improving efficiency.

In some embodiments, the automobile underbody die-cast structure 1 further includes one or more fourth connecting parts 13, and the fourth connecting parts 13 connect the first sill beam 20 and the additional insert 8. Additionally, the additional insert 8 is connected with the first connecting part 10, so that the first connecting part 10 connects the insert 5, the additional insert 8 and the first sill beam 20. In some embodiments, the automobile underbody die-cast structure 1 further includes one or more fourth connecting parts, and the fourth connecting parts connect the second sill beam 21 and the additional insert 8. Additionally, the additional insert 8 is connected with the second connecting part 11, so that the second connecting part 11 connects the insert 5, the additional insert 8 and the second sill beam 21. Referring to Fig. 2, Fig. 2 is a structural schematic diagram of another embodiment of the automobile underbody die-cast structure according to the present application. In the embodiment of the present application, the additional insert 8 is a B-pillar inner lower joint 80. Two B-pillar inner lower joints are respectively connected with the first sill beam 20 and the second sill beam 21 through the corresponding fourth connecting parts 13. The B-pillar inner lower joints 80 can be respectively connected with the shock tower brace 50 through the first connecting part 10 and the second connecting part 11. With this arrangement, the structural stability of the shock tower brace 50 and the B-pillar inner lower joint 80 in the front floor 2 can be enhanced. After the B-pillar inner lower joints 80 are cut, they can be used at the B-pillar position of this vehicle model or other vehicle models.

In some embodiments, the additional insert can be other vehicle body joints, such as a C-pillar upper joint, a C-pillar lower joint, a D-pillar upper joint or a D-pillar lower joint.

As shown in Figs. 1 and 2, a width of the first cross beam 22 is respectively greater than a width of each of the first sill beam 20 and the second sill beam 21. A strength of the first sill beam 20 or the second sill beam 21 is less than that of the first cross beam 22, so the insert 5 is arranged between the first sill beam 20 and the second sill beam 21. With this arrangement, the structural stability between the first sill beam 20 and the second sill beam 21 can be enhanced.

In some embodiments, a length of the first cross beam 22 is respectively less than a length of each of the first sill beam 20 and the second sill beam 21, that is, a distance between the first cross beam 22 and the second cross beam 23 is greater than a distance between the first sill beam 20 and the second sill beam 21.

Referring to the embodiments shown in Figs. 1 to 3, Fig. 3 is a structural schematic diagram of the shock tower brace installed on the engine compartment shock towers of the automobile underbody according to the present application. The automobile underbody die-cast structure 1 further includes a front engine compartment/bay 3 and a rear floor 4. The front engine compartment 3 includes front longitudinal beams 30 and one or more front cross beams 31, and the rear floor 4 includes rear longitudinal beams 40 and one or more rear cross beams 41. The front longitudinal beams 30 are located at both ends of the first cross beam 22 and connected with the first cross beam 22, and the front longitudinal beams 30 are connected with the first sill beam 20 and the second sill beam 21 respectively. The rear longitudinal beams 40 are located at both ends of the second cross beam 23, the rear longitudinal beams 40 are connected with the first sill beam 20 and the second sill beam 21 respectively, and there is a distance between a rear cross beam 41 and the second cross beam 23. The rear cross beam 41, the second cross beam 23 and two rear longitudinal beams 40 are connected to form another hollow area, but the space of this hollow area is small. Arranging the insert 5 in this hollow area is difficult to meet the requirements of dimensional space and die-casting structure design. In addition, the width of the first cross beam 22 is greater than that of the second cross beam 23, and connecting the insert 5 with the first cross beam 22 makes the structure more reliable.

Referring to Fig. 3, after the shock tower brace 50 is laser-cut from the hollow area 6 of the front floor 2, both ends of the shock tower brace 50 are installed on the shock towers 32 on both sides of the front engine compartment 3 to improve the torsional stiffness of the whole vehicle. Since the position of the shock tower brace 50 will interfere with assembly operation of operators when assembling automobile parts, the shock tower brace 50 cannot be directly arranged on the shock towers on both sides of the engine compartment and megacast with the automobile underbody. The shock tower brace 50 is arranged in the hollow area 6 of the front floor 2 and cut off for being assembled to the shock towers 32 on both sides of the front engine compartment 3 at an appropriate time. With this arrangement, the material utilization rate of the automobile underbody die-cast structure 1 can be improved, the mold for the shock tower brace 50 can be eliminated, thereby saving costs and improving efficiency. In addition, the megacasting of the shock tower brace 50 and the automobile underbody can improve the generalization rate of the shock tower brace 50 and reduce development cost.

Other embodiments of the present application will be readily apparent to those skilled in the art after considering the specification and practicing the application disclosed herein. The present application is intended to cover any variations, uses, or adaptations of the present application that follow the general principles of the present application and include common knowledge or conventional technical means in the technical field not disclosed in the present application. The specification and examples are to be regarded as exemplary only. The true scope and spirit of the present application are indicated by the following claims.

It should be understood that the present application is not limited to the precise structures described above and shown in the drawings, and various modifications and changes can be made without departing from its scope. The scope of the present application is limited only by the appended claims.

## Claims

1. An automobile underbody die-cast structure, wherein the automobile underbody die-cast structure is megacast and comprises a front floor and an insert;
the front floor comprises a hollow area, and
the insert is arranged in the hollow area of the front floor and connected with the front floor, and the insert and the front floor can be separated by cutting.

2. The automobile underbody die-cast structure according to claim 1, wherein the front floor comprises a first sill beam and a second sill beam arranged oppositely, and a first cross beam and a second cross beam connecting the first sill beam and the second sill beam,
the first sill beam, the second sill beam, the first cross beam and the second cross beam enclose to form the hollow area; and
the insert extends between the first sill beam and the second sill beam, or extends between the first cross beam and the second cross beam.

3. The automobile underbody die-cast structure according to claim 2, wherein the insert is staggered from a gating system for die-casting.

4. The automobile underbody die-cast structure according to claim 3, wherein
the insert extends between the first sill beam and the second sill beam, and the insert is located on a side of the gating system close to the first cross beam; or
the insert extends between the first cross beam and the second cross beam, and the insert is located on a side of the gating system close to the first sill beam or the second sill beam.

5. The automobile underbody die-cast structure according to claim 2, wherein the insert extends between the first sill beam and the second sill beam, and the automobile underbody die-cast structure further comprises a first connecting part, a second connecting part and a third connecting part,
the first connecting part connects one end of the insert and the first sill beam,
the second connecting part connects other end of the insert and the second sill beam, and
the third connecting part connects a middle part of the insert and the first cross beam.

6. The automobile underbody die-cast structure according to claim 5, wherein
a width of the first cross beam is greater than a width of each of the first sill beam and the second sill beam; and/or
a length of the first cross beam is less than a length of each of the first sill beam and the second sill beam.

7. The automobile underbody die-cast structure according to claim 5 or 6, further comprising a front engine compartment and a rear floor,
the front engine compartment comprises front longitudinal beams,
the rear floor comprises rear longitudinal beams and a rear cross beam;
the front longitudinal beams are located at both ends of the first cross beam and connected with the first cross beam, and the front longitudinal beams are connected with the first sill beam and the second sill beam respectively; and
the rear longitudinal beams are located at both ends of the second cross beam, the rear longitudinal beams are connected with the first sill beam and the second sill beam respectively, and there is a distance between the rear cross beam and the second cross beam.

8. The automobile underbody die-cast structure according to any one of claims 5 to 7, wherein the insert comprises a shock tower brace, the shock tower brace comprises a first sub-beam and a second sub-beam,
the first sub-beam is of a straight structure or a curved structure, the second sub-beam is of a curved structure, and a curvature of the second sub-beam is greater than that of the first sub-beam,
both ends of the first sub-beam and the second sub-beam are connected with each other, one end where the first sub-beam and the second sub-beam are connected is connected with the first connecting part, other end where the first sub-beam and the second sub-beam are connected is connected with the second connecting part, and the third connecting part connects the middle part of the first sub-beam and the first cross beam.

9. The automobile underbody die-cast structure according to any one of claims 5 to 8, further comprising an additional insert, wherein the additional insert is arranged in the hollow area of the front floor and connected with the front floor, and the additional insert and the front floor can be separated by cutting.

10. The automobile underbody die-cast structure according to claim 9, wherein the additional insert is connected with the first sill beam.

11. The automobile underbody die-cast structure according to claim 10, further comprising one or more fourth connecting parts, wherein the fourth connecting parts connect the first sill beam and the additional insert.

12. The automobile underbody die-cast structure according to claim 10 or 11, wherein the first connecting part connects the insert, the additional insert and the first sill beam.
